(19) **Europäisches Patentamt / European Patent Office / Office européen des brevets**

(11) **EP 3 770 034 B1**

(12) **FASCICULE DE BREVET EUROPEEN**

(45) Date de publication et mention de la délivrance du brevet:
**06.08.2025 Bulletin 2025/32**

(21) Numéro de dépôt: **20178226.5**

(22) Date de dépôt: **04.06.2020**

(51) Classification Internationale des Brevets (IPC):
**B60W 30/14** *(2006.01)* **B60W 30/18** *(2012.01)*
**B60W 40/109** *(2012.01)*

(52) Classification Coopérative des Brevets (CPC):
**B60W 30/146; B60W 30/14; B60W 30/143; B60W 30/18145; B60W 40/109;** B60W 2520/10; B60W 2520/125; B60W 2540/18; B60W 2552/30; B60W 2556/40; B60W 2556/50; B60W 2720/10; B60W 2720/106; B60W 2720/125

(54) **PROCÉDÉ DE PILOTAGE D'UN VÉHICULE AUTOMOBILE, PROCÉDÉ CORRESPONDANT**

**STEUERVERFAHREN EINES KRAFTFAHRZEUGS, KORRESPONDIERENDES KRAFTFAHRZEUG**

**METHOD FOR DRIVING A MOTOR VEHICLE, CORRESPONDING VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2019 FR 1908436**

(43) Date de publication de la demande:
**27.01.2021 Bulletin 2021/04**

(73) Titulaire: **Ampere SAS**
**92100 Boulogne-Billancourt (FR)**

(72) Inventeurs:
• **DAVINS-VALLDAURA, Joan**
**78150 LE CHESNAY (FR)**
• **DELANNOY, Mathieu**
**02680 GRUGIES (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
WO-A1-2018/047874    DE-A1- 102013 210 916
US-A- 5 272 635    US-A1- 2012 209 489
US-A1- 2019 232 970

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne de manière générale l'automatisation du pilotage des véhicules automobiles.

Elle concerne plus particulièrement un procédé de pilotage et un véhicule selon les revendications 1 et 9.

ETAT DE LA TECHNIQUE

Il est désormais bien connu d'équiper un véhicule automobile d'un système de gestion automatisée de sa vitesse en ligne droite (on parle notamment de système ACC, de l'anglais « Adaptive Cruise Control »).

Ces systèmes sont par exemple conçus pour piloter le véhicule de façon à ce que sa vitesse soit égale à une consigne donnée par le conducteur, excepté en présence d'évènement sur la route nécessitant un ralentissement du véhicule (bouchons, feu tricolore...), auquel cas la vitesse du véhicule est pilotée en conséquence.

Un type d'évènement doit être traité de manière particulière, à savoir les courbes telles que les virages ou les ronds-points. Avec ce type d'évènement, il est important d'ajuster la vitesse du véhicule à la courbure de la route de façon à éviter que le véhicule ne dérape ou que la force centrifuge ne soit trop grande eu égard au degré de confort recherché pour les passagers du véhicule.

Pour traiter ce type d'évènement particulier, on connait du document WO2007070160 une solution technique qui se base sur les informations de courbure de route stockées dans le système de navigation du véhicule pour construire une trajectoire puis un profil de vitesse que le véhicule doit suivre le long de cette trajectoire. Les documents DE 102013210916A1 et US 2012/0209489 A1 présentent des systèmes de contrôle comparables.

Bien que permettant une anticipation des courbes, cette solution technique est fortement dépendante des informations fournies par le système de navigation, lesquelles informations sont elles-mêmes soumises à de fortes incertitudes, ce qui peut s'avérer potentiellement dangereux pour les passagers du véhicule.

PRESENTATION DE L'INVENTION

Afin de remédier à l'inconvénient précité de l'état de la technique, la présente invention propose de mesurer ou de calculer en temps réel l'accélération latérale subie par le véhicule, et d'ajuster la consigne de vitesse longitudinale du véhicule en fonction de cette accélération latérale.

Plus particulièrement, on propose selon l'invention un procédé de pilotage tel que défini par la revendication 1.

Ainsi, grâce à l'invention, il est possible de limiter l'impact des erreurs d'estimations issues du système de navigation et de corriger, en temps réel, la vitesse du véhicule afin de maintenir une accélération latérale qui soit acceptable par les passagers du véhicule et par le véhicule lui-même et qui permette de ne pas ralentir le véhicule plus que de nécessaire.

Ce procédé ne nécessite l'ajout d'aucun capteur particulier en ce sens que les véhicules actuellement sur le marché sont déjà équipés de capteurs permettant sa mise en œuvre, si bien qu'il peut être implémenté facilement et sans surcoût sur ce type de véhicules.

Ce procédé peut en outre être implémenté dans des véhicules dépourvus de système de navigation.

Enfin, sa mise au point s'avérera particulièrement simple puisqu'elle pourrait ne consister à ne régler que deux seuls paramètres (les gains des régulateurs) de manière à tenir compte des spécificités de la gamme de véhicules sur laquelle cette solution serait déployée.

D'autres caractéristiques avantageuses et non limitatives du procédé de pilotage conforme à l'invention, prises individuellement ou selon toutes les combinaisons techniquement possibles, sont les suivantes :

- la consigne de vitesse longitudinale est déterminée de telle sorte que l'accélération latérale subie par le véhicule automobile soit inférieure ou égale à une consigne d'accélération latérale, et de préférence égale à ladite consigne d'accélération latérale ;
- la consigne de vitesse longitudinale est déterminée de telle sorte que la dérivée de l'accélération longitudinale subie par le véhicule automobile soit la plus proche possible de zéro ;
- la dérivée de la consigne de vitesse longitudinale présente une valeur saturée entre deux bornes ;
- les étapes de vérification, de détermination et de pilotage sont répétées en boucle, à une fréquence d'échantillonnage supérieure à un Hertz ;
- au cours de l'étape de vérification, le calculateur vérifie si la distance entre véhicule et ladite courbe est inférieure à un seuil de distance et si l'angle d'inclinaison du volant est supérieur à un seuil angulaire ;
- il est mis fin au procédé lorsque l'angle d'inclinaison du volant a atteint un maximum puis a décru d'un angle supérieur à un autre seuil angulaire ;
- il est mis fin au procédé lorsqu'est détecté un évènement en aval de ladite courbe qui requiert un freinage du véhicule automobile.

L'invention propose également un véhicule tel que défini en introduction, dont le calculateur sera programmé pour mettre en œuvre le procédé précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique d'un véhicule et d'une route empruntée par ce véhicule ;

[Fig. 2] est un graphique illustrant la variation d'accélération latérale subie par le véhicule de la figure 1 en fonction du rayon de courbure de la route empruntée, pour 15 valeurs de vitesses distinctes ;

[Fig. 3] est une représentation des étapes d'un procédé de pilotage conforme à l'invention ;

[Fig. 4] est une représentation graphique d'une loi de commande utilisée pour calculer une consigne de vitesse longitudinale pour le véhicule de la figure 1 ;

[Fig. 5] est un graphique illustrant la variation d'angle maximum du volant en fonction de la vitesse longitudinale du véhicule de la figure 1 ;

[Fig. 6] est un graphique illustrant la variation d'une variable GW en fonction du rapport entre l'angle courant du volant et l'angle maximum ;

[Fig. 7] est un chronogramme illustrant un premier exemple de variation d'un indicateur d'activation du procédé conforme à l'invention ;

[Fig. 8] est un graphique cadencé sur le chronogramme de la figure 7, illustrant les variations d'angle du volant du véhicule ;

[Fig. 9] est un graphique cadencé sur le chronogramme de la figure 7, illustrant les variations d'une accélération latérale de référence et de l'accélération latérale du véhicule ;

[Fig. 10] est un graphique cadencé sur le chronogramme de la figure 7, illustrant les variations de l'accélération longitudinale du véhicule ;

[Fig. 11] est un graphique cadencé sur le chronogramme de la figure 7, illustrant les variations de vitesse longitudinale du véhicule ;

[Fig. 12] est un chronogramme illustrant un second exemple de variation d'un indicateur d'activation du procédé conforme à l'invention ;

[Fig. 13] est un graphique cadencé sur le chronogramme de la figure 12, illustrant les variations d'angle du volant du véhicule ;

[Fig. 14] est un graphique cadencé sur le chronogramme de la figure 12, illustrant les variations d'une accélération latérale de référence et de l'accélération latérale du véhicule ;

[Fig. 15] est un graphique cadencé sur le chronogramme de la figure 12, illustrant les variations de l'accélération longitudinale du véhicule ;

[Fig. 16] est un graphique cadencé sur le chronogramme de la figure 12, illustrant les variations de vitesse longitudinale du véhicule.

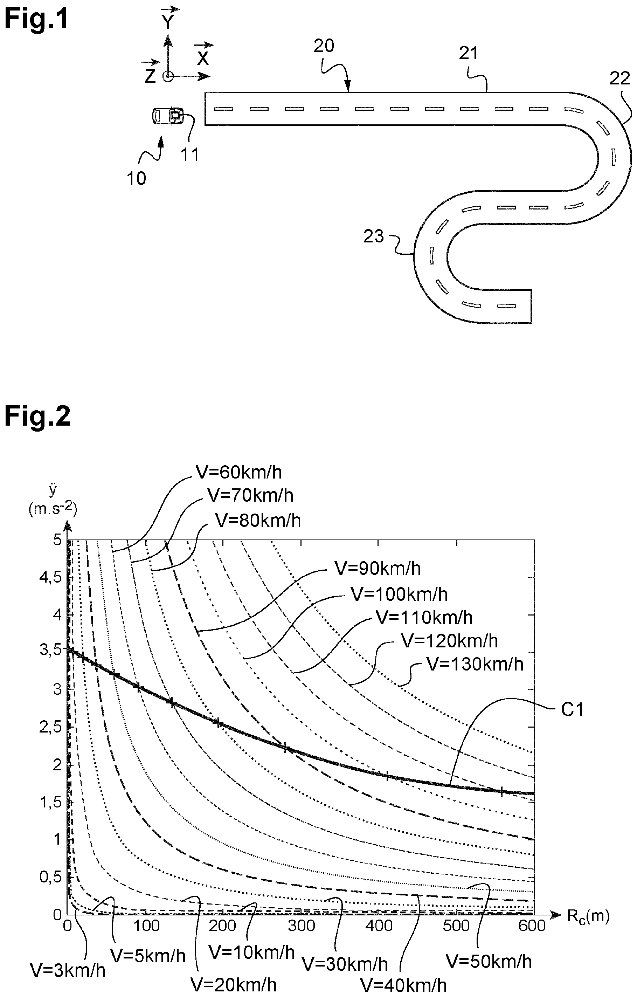

Sur la figure 1, on a représenté un véhicule automobile 10 roulant sur une route 20.

On considérera ici que cette route comporte un tronçon rectiligne 21 suivi d'un premier virage 22, lui-même éventuellement suivi d'un second virage 22.

Le véhicule 10 est ici une voiture mais il pourrait s'agir d'un autre type de véhicule (moto, camion...). Il comporte un châssis qui est supporté par des roues et qui supporte lui-même différents équipements parmi lesquels un groupe motopropulseur, des moyens de freinage, et un calculateur.

Il pourra s'agir d'un véhicule à pilotage manuel, auquel cas ce dernier sera équipé de moyens d'assistance à la conduite, ou, préférentiellement, d'un véhicule autonome.

Comme le montre la figure 1, on considérera ici un repère (X, Y, Z) attaché au véhicule, dont l'axe longitudinal X sera orienté de l'arrière vers l'avant du véhicule, dont l'axe latéral Y sera orienté vers le côté gauche du véhicule, et dont l'axe vertical Z sera orienté vers le haut.

Ce véhicule 10 est préférentiellement équipé d'un système de navigation comprenant un système de cartographie répertoriant des routes, des évènements et des informations relatives à ces routes et évènements, et d'un système de géolocalisation (par exemple de type GPS) adapté à positionner le véhicule 10 sur ces routes.

On considérera ici un type particulier d'évènement, à savoir les zones courbées de la route (virages, ronds-points...). Dans l'exemple illustré sur la figure 1, on considérera plus particulièrement les virages 22, 23. Le système de navigation sera ici en mesure de déterminer la position du véhicule par rapport aux virages 22, 23, ainsi que les rayons de courbure de ces virages.

Le véhicule 10 est également équipé d'un capteur lui permettant notamment de déterminer l'accélération latérale subie par le véhicule (c'est-à-dire l'accélération selon l'axe latéral Y). Il pourrait s'agir d'un capteur inertiel ou de tout autre type de capteurs. Il s'agira ici d'un capteur adapté à mesurer la vitesse de lacet $d\Psi/dt$ du véhicule.

Le véhicule 10 est par ailleurs équipé d'un capteur de vitesse longitudinale adapté à mesurer la vitesse avec laquelle le véhicule évolue le long de la route 20. Ce capteur de vitesse est par exemple adapté à mesurer la vitesse de rotation des roues du véhicule à en déduire la valeur de la vitesse longitudinale $dx/dt$. Ce capteur permettra en outre de calculer la valeur de l'accélération longitudinale $d^2x/dt^2$ du véhicule. En variante, on pourra utiliser pour cela un capteur d'accélération.

Afin de traiter les informations fournies par ces capteurs et afin d'être en mesure d'élaborer une consigne de vitesse longitudinale $dx^*/dt$ pour le véhicule 10, ce dernier est équipé d'un calculateur 11.

Ce calculateur 11 comporte un processeur, une mémoire et différentes interfaces d'entrée et de sortie.

Grâce à ses interfaces d'entrée, le calculateur est adapté à recevoir des signaux d'entrée provenant des capteurs de vitesse longitudinale et de vitesse de lacet.

La mémoire du calculateur mémorise une application informatique, constituée de programmes d'ordinateur comprenant des instructions dont l'exécution par le processeur permet la mise en œuvre par le calculateur du procédé décrit ci-après.

Parmi ces programmes d'ordinateur, l'un assure une fonction de régulateur de vitesse adaptatif ACC.

Selon l'invention, un autre de ces programmes assure une fonction de régulateur de vitesse en courbe CCC (de l'anglais Curve Cruise Control).

La fonction de régulateur de vitesse adaptatif ACC (ci-après appelée fonction ACC) étant bien connue de l'Homme de l'art, elle ne sera pas ici décrite. On expliquera seulement qu'elle permet de calculer une consigne de vitesse longitudinale pour le véhicule 10 adaptée à la route et à la vitesse du véhicule automobile précédant le véhicule 10 ici considéré.

La fonction de régulateur de vitesse en courbe CCC (ci-après appelée fonction CCC) faisant plus particulièrement l'objet de la présente invention, elle sera décrite ci-après en détail.

A ce stade, on pourra seulement préciser que cette fonction CCC est également prévue pour calculer une consigne de vitesse longitudinale pour le véhicule 10 lorsque ce dernier se trouve dans une courbe et que certaines conditions sont remplies. Cette fonction CCC sera donc prévue pour se substituer à la fonction ACC dans ces seules conditions.

Grâce à ses interfaces de sortie, le calculateur est adapté à transmettre des consignes aux différents organes du véhicule, et notamment au groupe motopropulseur et aux moyens de freinage. Il permet ainsi de commander l'accélération, la décélération et le freinage du véhicule de façon autonome, sans intervention du conducteur du véhicule 10.

Le procédé selon l'invention est donc prévu pour générer une consigne de vitesse longitudinale dx*/dt lorsque le véhicule se trouve dans un virage et que certaines conditions sont remplies.

A titre liminaire, on pourra préciser que la notation d/dt sera utilisée pour désigner la dérivée première d'un paramètre (il s'agira en pratique d'une vitesse).

La notation $d^2/dt^2$ sera utilisée pour désigner la dérivée seconde d'un paramètre (il s'agira en pratique d'une accélération).

La notation $d^3/dt^3$ sera utilisée pour désigner la dérivée troisième d'un paramètre.

L'indice « est » sera quant à lui utilisé pour exprimer le caractère estimé du paramètre auquel il sera apposé.

L'exposant « * » sera en revanche utilisé pour exprimer que le paramètre auquel il sera apposé est une consigne.

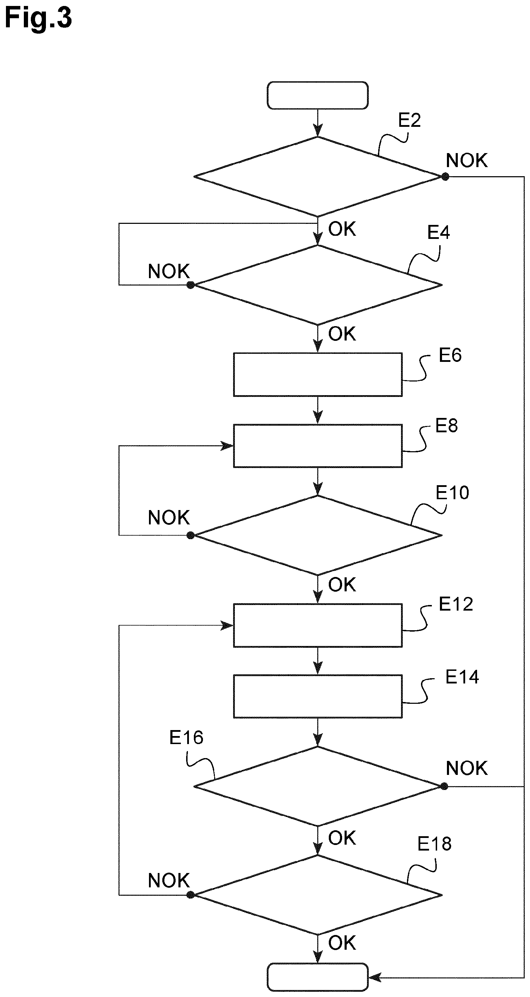

On peut maintenant décrire en détail la façon selon laquelle le calculateur met en œuvre le procédé de calcul de la consigne de vitesse longitudinale dx*/dt, en référence à la figure 3.

Ce procédé s'initiera dès le démarrage du véhicule 10. Il sera mis en œuvre en boucle, à une fréquence d'échantillonnage élevée, bien supérieure au Hertz.

Ici, on considérera que le véhicule roule déjà sur le tronçon rectiligne 21 de la route 20.

Alors, au cours d'une première étape E2, le calculateur détermine si la fonction ACC est activée ou non.

Il peut en effet arriver qu'elle soit désactivée, notamment dans le cas où le conducteur souhaite conduire par lui-même son véhicule 10. Dans cette éventualité, il est mis fin au processus.

Dans le cas contraire, le procédé se poursuit en une seconde étape E4 au cours de laquelle le calculateur 11 vérifie si le système de navigation détecte un évènement tel que, dans notre exemple, un virage 22.

Cette « détection » est réalisée avec une portée prédéterminée, par exemple à moins de 100 mètres (cette distance pouvant être différente et pouvant varier en fonction de la vitesse du véhicule).

Tant qu'aucun virage n'est détecté, cette étape E4 se répète en boucle. Puis, dès qu'un virage 22 est détecté, le procédé se poursuit en une étape E6.

Au cours de cette étape E6, le calculateur détermine une vitesse longitudinale d'entrée $dx_e/dt$ dans le virage 21.

En pratique, le calculateur 11 cherche la vitesse à laquelle il faudra aborder le virage de façon à ce que la force centrifuge qui s'appliquera sur le véhicule soit égale à une valeur cible. En d'autres termes, l'objectif est que le véhicule puisse aborder le virage à une vitesse qui lui garantisse de présenter une accélération latérale $d^2y/dt^2$ déterminée.

A ce stade, le calculateur ne peut se baser que sur les informations stockées dans le système de navigation (en variante ou en complément, il pourrait se baser sur des informations acquises au moyen d'une caméra) et sur une cartographie stockée dans sa mémoire, qui est illustrée sur la figure 2.

Sur cette figure, on a illustré la variation, en fonction du rayon de courbure Rc de la route 20, de l'accélération latérale $d^2y/dt^2$ qui serait subie par le véhicule à différentes vitesses longitudinales V (ou dx/dt).

On a également représenté une courbe de référence C1 qui illustre la variation de la consigne d'accélération latérale $d^2y/dt^2$ à laquelle on souhaite que le véhicule aborde un virage (de façon à ce qu'il subisse une force centrifuge déterminée).

La vitesse longitudinale d'entrée $dx_e/dt$ est alors lue sur cette cartographie.

En pratique, la vitesse longitudinale d'entrée $dx_e/dt$ est plus précisément obtenue par interpolation linéaire, en fonction du rayon de courbure Rc de l'entrée sur virage 22 mémorisée dans le système de navigation, de façon à se trouver sur la courbe de référence C1.

A l'étape E8 suivante, la fonction ACC du calculateur 11 établit alors un profil de consigne de vitesse permettant de piloter le groupe motopropulseur et les moyens de freinage de telle sorte que le véhicule arrive à l'entrée du virage 22 à la vitesse longitudinale d'entrée $dx_e/dt$.

Cette stratégie permet au calculateur 11 d'anticiper le virage 22 en faisant décélérer le véhicule bien en amont du virage. Ici, cette phase de décélération est obtenue en utilisant tout d'abord le frein-moteur, puis le frein-moteur couplé aux moyens de freinage si cela s'avère nécessaire. Bien entendu, toute autre stratégie adaptée serait employable.

Au cours de l'étape suivante E10, le calculateur cherche à déterminer si le véhicule 10 est encore situé en amont du virage 22, ou s'il est situé à l'entrée ou dans le virage 22.

En effet, cette condition est nécessaire pour activer la fonction CCC et la substituer à la fonction ACC.

Lors de cette étape, le calculateur utilise un indicateur β de type booléen, qui est initialement mis à zéro.

Ici, il est plus exactement prévu trois conditions nécessaires pour activer la fonction CCC de pilotage en courbe du véhicule.

La première condition, qui est déjà remplie à ce stade, est que l'évènement détecté par le système de navigation soit bien de type courbe (il s'agit ici d'un virage 22).

La seconde condition est que la distance séparant le véhicule 10 du virage 22 soit inférieure à un seuil de distance $S_d$ prédéfini, ici choisi égal à 10 mètres.

Ce seuil de distance $S_d$ est ici fixe mais il serait possible d'employer un seuil qui varie en fonction de la vitesse du véhicule et/ou du temps de réaction du système et/ou des caractéristiques du virage.

La troisième condition est que le volant du véhicule soit tourné d'un angle d'inclinaison α (mesuré par rapport à la position médiane du volant) supérieur à un seuil angulaire $S_{a1}$ prédéterminé, ici égal à 3 degrés. Ici encore, il serait envisageable que ce seuil varie en fonction de différents paramètres.

Tant que l'ensemble de ces trois conditions ne sont pas réunies, l'étape E10 se répète en boucle et l'indicateur β est laissé égal à zéro.

Dès lors qu'elles sont réunies, ce qui signifie que le véhicule est bien entré dans le virage 22, le calculateur 11 affecte la valeur 1 à l'indicateur β.

Puis, le procédé se poursuit en des étapes E12 puis E14, permettant de calculer la consigne de vitesse longitudinale dx*/dt.

Ces étapes et les suivantes sont mises en œuvre en boucle de façon à ce que la consigne de vitesse longitudinale dx*/dt soit ajustée dynamiquement tout le long du virage 22, à une fréquence élevée, en fonction des conditions réelles rencontrées par le véhicule 10 (éventuellement indépendamment des données issues du système de navigation).

L'objectif est de faire en sorte que l'accélération latérale $d^2y/dt^2$ subie par le véhicule soit contrôlée en temps réel.

On pourrait faire en sorte de contrôler la vitesse du véhicule de façon à ce que l'accélération latérale $d^2y/dt^2$ reste constante dans le virage.

Toutefois, ici, on fera en sorte que cette accélération latérale $d^2y/dt^2$ varie en fonction du rayon de courbure de la partie empruntée du virage 22, de manière à ce qu'elle suive la courbe de référence C1 illustrée sur la figure 2.

L'objectif est également que le calculateur 11 tienne compte de la vitesse longitudinale d'entrée $dx_e/dt$, puis qu'il l'ajuste en fonction de l'accélération latérale $d^2y/dt^2$ subie par le véhicule, en évitant tout freinage trop brusque.

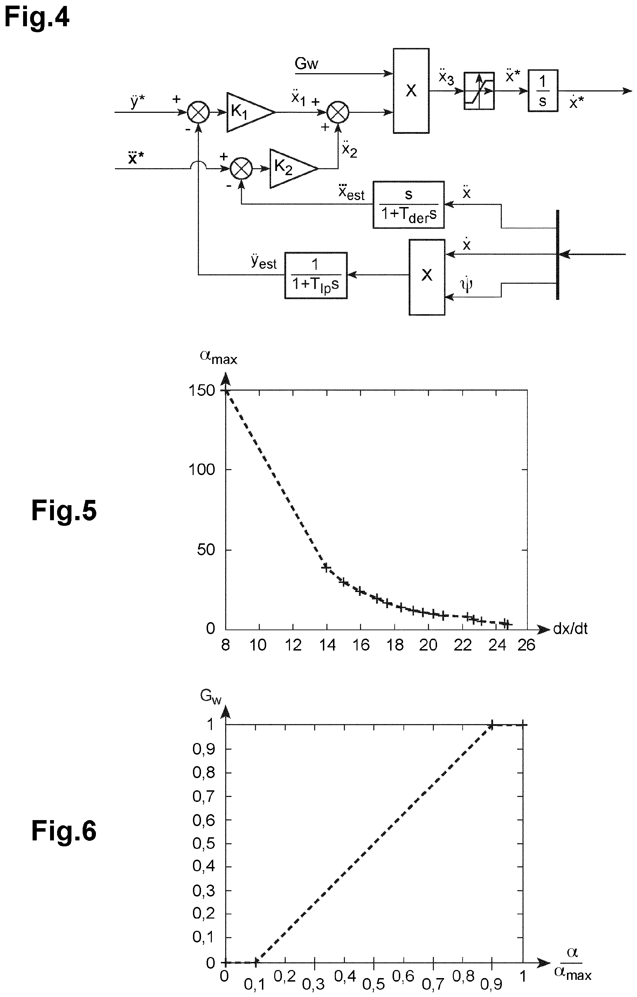

En pratique, le calcul de la consigne de vitesse longitudinale dx*/dt est réalisé en boucle fermé, à l'aide d'une loi de commande telle que celle illustrée sur la figure 4. Cette régulation n'est donc pas uniquement une limitation mais autorise voire commande l'accélération du véhicule si nécessaire.

Cette loi de commande utilise deux régulateurs $K_1$, $K_2$.

Le premier régulateur est utilisé de façon à ce que l'accélération latérale $d^2y/dt^2$ du véhicule (ou plutôt son estimation notée $d^2y_{est}/dt^2$) soit égale à une consigne d'accélération latérale $d^2y*/dt^2$.

La consigne d'accélération latérale $d^2y*/dt^2$ est lue dans la cartographie illustrée sur la figure 2, en fonction de la vitesse mesurée dx/dt du véhicule et du rayon de courbure Rc du virage (lequel peut être mesuré de différentes manières connues au moyen de capteurs, ou acquis au moyen du système de navigation).

L'estimation de l'accélération latérale $d^2y_{est}/dt^2$ subie par le véhicule 10 est quant à elle ici réalisée en fonction des valeurs mesurées de la vitesse de lacet $d\Psi/dt$ et de la vitesse longitudinale dx/dt du véhicule. En variante, l'une et/ou l'autre de ces valeurs pourraient être calculées, par exemple au moyen d'un filtre de Kalman. Le calculateur 11 estime alors l'accélération latérale $d^2y_{est}/dt^2$ au moyen de l'équation mathématique suivante :

$$[Math.\ 1]$$
$$d^2y_{est}/dt^2 = d\Psi/dt \cdot dx/dt$$

Le régulateur $K_1$ permet alors d'obtenir une première consigne d'accélération $d^2x_1/dt^2$, compte tenu de la différence entre la consigne d'accélération latérale $d^2y*/dt^2$ et l'estimation de l'accélération latérale $d^2y_{est}/dt^2$.

Le second régulateur $K_2$ est quant à lui prévu pour limiter les oscillations de l'accélération longitudinale dans le virage 22 (plus connues sous le nom anglais de « Jerk »).

Pour cela, le calculateur estime la dérivée de l'accélération longitudinale $d^3x_{est}/dt^3$ du véhicule 10. Cette estimation est ici réalisée au moyen d'une dérivée filtrée, en fonction de l'accélération longitudinale $d^2x_{est}/dt^2$.

La consigne de dérivée de l'accélération, notée $d^3x*/dt^3$, est quant à elle choisie nulle.

Le régulateur $K_2$ permet alors d'obtenir une seconde consigne d'accélération $d^2x_2/dt^2$, compte tenu de l'estimation de l'accélération longitudinale $d^2x_{est}/dt^2$.

Sur cette figure 4, les paramètres $T_{der}$ et $T_{lp}$ sont des constantes de temps.

La constante de temps $T_{der}$ est utilisée pour réaliser la « pseudo-dérivée » ou « dériviée filtrée » de l'accélération longitudinale du véhicule pour obtenir la valeur de $d^3x_{est}/dt^3$.

La constante de temps $T_{lp}$ est utilisé pour le filtre « passe-bas » et permet de réduire le bruit de mesure sur l'estimation de l'accélération latérale $d^2y/dt^2$.

Les deux régulateurs $K_1$, $K_2$ ont des gains devant être calibrés lors de la conception du véhicule et/ou lors de l'utilisation du véhicule.

Classiquement, le gain du régulateur $K_1$ permet de régler la dynamique de la consigne de vitesse. Comme pour toute loi de commande, une dynamique importante peut entrainer des dépassements et des oscillations sur la vitesse du véhicule. Ici, pour obtenir les meilleures performances possibles, tout en évitant des dépassements trop importants et trop d'oscillations de vitesse, le gain du régulateur $K_1$ est choisi égal à 1,5.

Le gain du régulateur $K_2$ permet de limiter les oscillations de l'accélération longitudinale du véhicule. Augmenter ce gain permet de limiter les dépassements et les oscillations mais entraine un ralentissement de la dynamique de contrôle. Le compromis choisi pour ce gain est de 0,85.

Bien entendu, ces valeurs fixes pourront être différentes selon le type du véhicule.

En variante, ces valeurs pourront être variables en fonction des conditions dans lesquelles le véhicule roule, et notamment en fonction de la masse du véhicule (qui dépendra du nombre d'occupants et de la charge embarquée). On pourra à cet effet utiliser des cartographies développées lors de la conception du véhicule et stockées dans la mémoire du calculateur 11.

Comme le montre la figure 2, les deux consignes d'accélération $d^2x_2/dt^2$, $d^2x_2/dt^2$ sont sommées et cette somme est ensuite multipliée par une variable Gw.

Cette variable Gw est utilisée comme un facteur de pondération de façon à donner progressivement du poids aux deux consignes d'accélération lors de l'entrée du véhicule 10 dans le virage 22.

La détermination de cette variable Gw est réalisée en deux temps, au moyen de deux cartographies illustrées sur les figures 5 et 6.

Dans un premier temps, le calculateur détermine, en fonction de la vitesse longitudinale dx/dt du véhicule 10, une valeur maximum d'angle du volant $\alpha_{max}$ (voir figure 5). Cette valeur maximum correspond à une valeur au-delà de laquelle la sécurité et le confort des passagers du véhicule ne seraient plus assurés de manière satisfaisante.

Dans un second temps, le calculateur détermine la variable Gw en fonction du rapport entre l'angle mesuré du volant $\alpha$ et la valeur maximum d'angle du volant $\alpha_{max}$.

Le calculateur obtient ainsi une troisième consigne d'accélération $d^2x_3/dt^2$, qui est ensuite saturée de façon à limiter la consigne d'accélération en fonction notamment des capacités d'accélération du véhicule 1, puis intégrée de façon à obtenir la consigne de vitesse longitudinale dx*/dt.

Sur la figure 3, l'étape E12 correspond au calcul de la variable Gw et l'étape E14 correspond au calcul de la consigne de vitesse longitudinale dx*/dt et à l'envoi de cette consigne au groupe motopropulseur et/ou aux moyens de freinage.

Le procédé se poursuit alors en des étapes E16 et E18 qui permettent de vérifier si l'une ou l'autre de deux conditions de désactivation de la fonction CCC sont remplies (le processus s'interrompant dès lors que l'une de ces conditions est remplie).

La première condition consiste à déterminer si le conducteur ramène ou non le volant vers sa position médiane, ce qui signifie que le véhicule 10 sort du virage.

Pour cela, l'angle d'inclinaison maximal $\alpha_{up}$ atteint par le volant depuis l'entrée dans le virage 22 est détecté, puis dès que l'angle d'inclinaison $\alpha$ baisse au-delà d'un pourcentage prédéterminé de cet angle d'inclinaison maximal $\alpha_{up}$, le processus s'interrompt.

Ce pourcentage est prédéfini et est par exemple compris entre 30 et 90%. Il est ici égal à 50%. Ainsi, dès que le volant revient vers sa position médiane en tournant au-delà d'un second seuil angulaire $S_{a2}$ égal à la moitié de son angle d'inclinaison maximal $\alpha_{up}$, le processus s'interrompt. Alors, l'indicateur $\beta$ est remis à zéro.

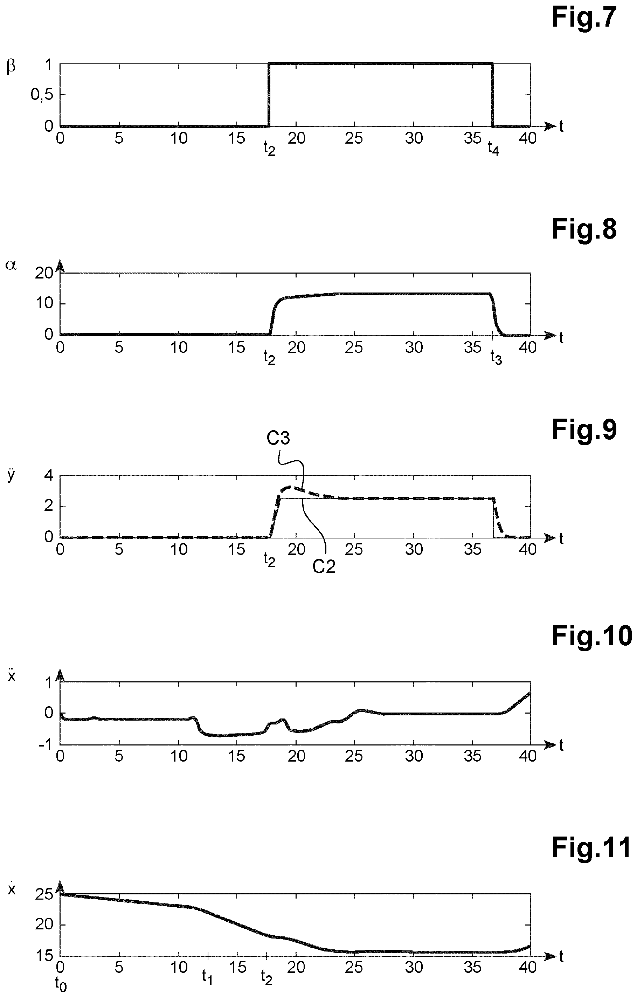

Avant de décrire la seconde condition, on peut observer sur les figures 7 à 11 un exemple de mise en œuvre du procédé de pilotage.

Dans cet exemple, on se place dans le cas où la route 20 ne comporte qu'un seul virage 22.

Sur la figure 7, on observe que l'indicateur $\beta$, dont on rappelle qu'il indique si le véhicule est entré ou non dans le virage 22, est égal à zéro tant que le véhicule roule sur le tronçon rectiligne 21, puis qu'il est mis à 1 à l'instant $t_2$ auquel les trois conditions précitées sont réunies.

On observe sur la figure 11 que la vitesse longitudinale dx/dt du véhicule décroit progressivement à partir de l'instant $t_0$ où le virage 22 a été détecté. Elle diminue tout d'abord lentement, au moyen du seul frein-moteur, puis plus sensiblement à partir de l'instant $t_1$, au moyen de ce frein moteur et des moyens de freinage. On observe sur la figure 10 les variations d'accélération longitudinale $d^2x/dt^2$.

Sur la figure 8, on observe qu'à l'instant $t_2$, l'angle d'inclinaison $\alpha$ du volant a commencé à augmenter (et dépasse 3°). Il continue sa progression puis se stabilise à environ 12 degrés jusqu'à un instant $t_3$ où il chute brutalement.

Cette chute provoque, un court moment après (à l'instant $t_4$), la mise à zéro de l'indicateur $\beta$.

Sur la figure 9, on a représenté, par la courbe C2, la variation de la consigne d'accélération latérale $d^2y*/dt^2$. On a également représenté, par la courbe C3, la variation de l'estimation de l'accélération latérale $d^2y_{est}/dt^2$. On y observe que cette estimation est continue et continûment dérivable, ce qui évite tout à-coup pour les passagers. On y observe également qu'elle suit rapidement la forme de la consigne, ce qui permet d'éviter que l'accélération latérale subie par le véhicule ne soit trop importante.

Ce mode de calcul de la consigne de vitesse longitudinale $dx*/dt$ a pour avantage de faire en sorte de pouvoir faire ralentir le véhicule si les conditions l'exigent, ou de pouvoir faire accélérer le véhicule par exemple parce que le virage s'ouvre progressivement. Le véhicule n'est donc pas bloqué à sa vitesse longitudinale d'entrée $dx_e/dt$. En effet, ce mode de calcul n'est pas seulement actif en amont du virage mais bien tout au long de celui-ci.

On peut maintenant décrire la seconde condition.

Cette seconde condition consiste à déterminer si un évènement situé dans le virage ou plus loin sur la route nécessite un freinage du véhicule, et à revenir à la fonction ACC dans ce cas.

Pour cela, le calculateur cherche à détecter tout évènement situé en aval du véhicule 10 le long de la route 20, dans une portée donnée, qui est par exemple une portée de trois kilomètres en utilisant les informations du système de navigation.

Pour chacun de ces évènements, le calculateur détermine s'il sera nécessaire de réduire la consigne de vitesse longitudinale $dx*/dt$ du véhicule 10 en décélérant avec une accélération longitudinale Decel, en valeur absolue, supérieure à un seuil prédéterminé de décélération.

Cette accélération longitudinale est ici estimée en considérant la vitesse instantanée $V_0$ du véhicule, la vitesse $V_1$ à laquelle le véhicule devra aborder cet évènement et la distance D séparant le véhicule 10 de cet évènement, et en réalisant le calcul suivant :

$$[\text{Math. 2}]$$

$$\text{Decel} = (V_0^2 - V_1^2) / (2.D)$$

Si l'accélération longitudinale Decel est supérieure au seuil prédéterminé de décélération, le processus s'interrompt. Alors, l'indicateur $\beta$ est remis à zéro.

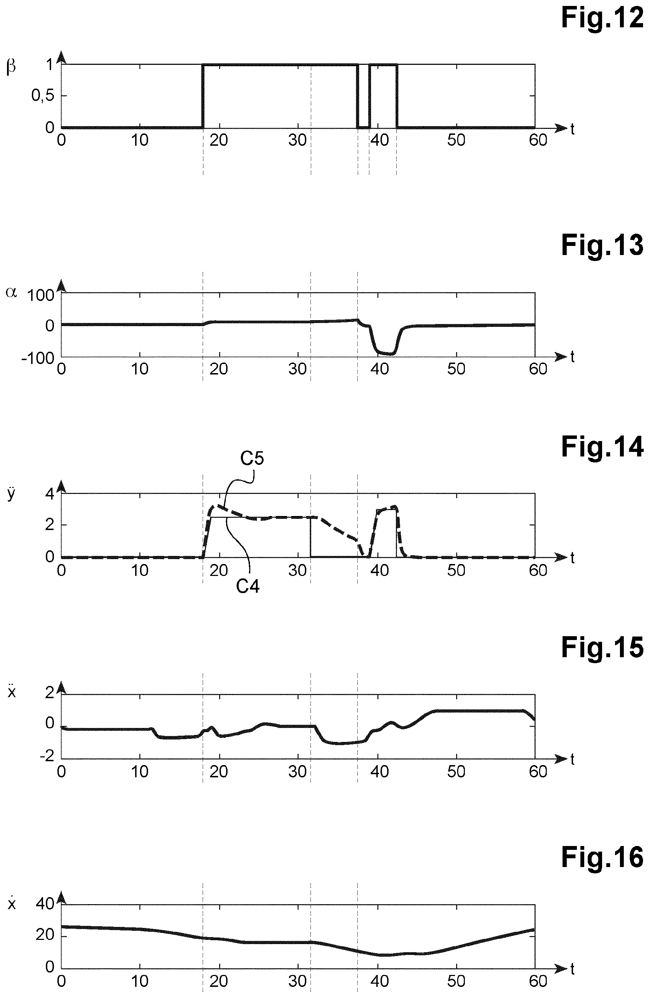

On peut observer sur les figures 12 à 16 un autre exemple de mise en œuvre du procédé de pilotage, illustrant bien cette seconde condition.

Dans cet exemple, on se place dans le cas où la route 20 comporte deux virages 22, 23 distincts et successifs.

Sur la figure 12, on observe que l'indicateur $\beta$ est égal à zéro tant que le véhicule roule sur le tronçon rectiligne 21, puis qu'il est mis à 1 lorsque le véhicule entre dans le virage. En effet, à ce stade, le second virage 23 est si loin que l'accélération longitudinale Decel est inférieure au seuil prédéterminé.

L'indicateur $\beta$ est toutefois remis à zéro lorsque le calculateur constate que l'accélération longitudinale Decel nécessaire pour entrer dans le second virage 23 avec une vitesse adéquate dépasse le seuil prédéterminé de décélération.

Par conséquent, la consigne de vitesse longitudinale du véhicule est élaborée à l'aide de la fonction CCC que dans une première partie du premier virage 22. La fin de ce virage et le tronçon rectiligne situé entre les deux virages est pour sa part abordé à une vitesse définie par la fonction ACC. Puis, l'indicateur $\beta$ est remis à 1 lorsque le véhicule entre dans le second virage. Cet indicateur $\beta$ est ensuite maintenu à cette valeur jusqu'à la sortie de ce second virage 23.

On observe sur la figure 16 que la vitesse longitudinale $dx/dt$ du véhicule décroit avant l'entrée dans le premier virage puis avant l'entrée dans le second virage.

On observe sur la figure 15 les variations d'accélération longitudinale $d^2x/dt^2$.

Sur la figure 13, on observe que l'angle d'inclinaison $\alpha$ du volant varie dans un sens dans le premier virage, et dans l'autre dans le second. C'est lui qui provoque la mise à zéro de l'indicateur $\beta$ à la sortie du second virage.

Sur la figure 14, on a représenté, par la courbe C4, la variation de la consigne d'accélération latérale $d^2y*/dt^2$. On a également représenté, par la courbe C5, la variation de l'estimation de l'accélération latérale $d^2y_{est}/dt^2$. On y observe que cette estimation est continue et continûment dérivable et qu'elle suit rapidement la forme de la consigne.

La présente invention n'est nullement limitée au mode de réalisation décrit mais l'homme du métier saura y apporter toute variante conforme à l'invention.

## Revendications

1. Procédé de pilotage d'un véhicule automobile (10), comprenant :

    - une étape de vérification au cours de laquelle un calculateur (11) embarqué dans le véhicule automobile (10) vérifie si le véhicule automobile (10) se trouve à l'entrée d'une courbe (21 ; 22) ou dans une courbe (21 ; 22), puis, si tel est le cas,
    - une étape d'acquisition d'une accélération latérale ($d^2y_{est}/dt^2$) subie par le véhicule automobile (10),
    - une étape de détermination au cours de laquelle le calculateur (11) détermine une consigne de vitesse longitudinale ($dx*/dt$) en fonction de l'accélération latérale ($d^2y_{est}/dt^2$) acquise, et
    - une étape de pilotage au cours de laquelle le véhicule est piloté selon la consigne de vitesse longitudinale (dx*/dt), et dans lequel

la dérivée de la consigne de vitesse longitudinale (dx*/dt) présente une valeur qui dépend d'un angle d'inclinaison ($\alpha$) du volant du véhicule automobile (10) et est déterminée de manière à présenter :

- une valeur nulle si l'angle d'inclinaison ($\alpha$) est nul,
- une valeur maximale si l'angle d'inclinaison ($\alpha$) est égal à un maximum déterminé en fonction du rayon de courbure de la courbe (21 ; 22), et sinon
- une valeur qui est fonction de l'angle d'inclinaison ($\alpha$) et qui est comprise entre zéro et ladite valeur maximale.

2. Procédé de pilotage selon la revendication précédente, dans lequel la consigne de vitesse longitudinale (dx*/dt) est déterminée de telle sorte que l'accélération latérale ($d^2y_{est}/dt^2$) subie par le véhicule automobile (10) soit inférieure ou égale à une consigne d'accélération latérale ($d^2y*/dt^2$), et de préférence égale à ladite consigne d'accélération latérale ($d^2y*/dt^2$).

3. Procédé de pilotage selon l'une des revendications précédentes, dans lequel la consigne de vitesse longitudinale (dx*/dt) est déterminée de telle sorte que la dérivée de l'accélération longitudinale ($d^3x_{est}/dt^3$) subie par le véhicule automobile (10) soit la plus proche possible de zéro.

4. Procédé de pilotage selon l'une des revendications précédentes, dans lequel la dérivée de la consigne de vitesse longitudinale (dx*/dt) présente une valeur saturée entre deux bornes.

5. Procédé de pilotage selon l'une des revendications précédentes, dans lequel les étapes de vérification, de détermination et de pilotage sont répétées en boucle, à une fréquence supérieure à un Hertz.

6. Procédé de pilotage selon l'une des revendications précédentes, dans lequel, au cours de l'étape de vérification, le calculateur (11) vérifie si la distance entre véhicule (10) et ladite courbe est inférieure à un seuil de distance ($S_d$) et si l'angle d'inclinaison ($\alpha$) du volant est supérieur à un seuil angulaire ($S_{a1}$).

7. Procédé de pilotage selon l'une des revendications précédentes, dans lequel il est mis fin au procédé lorsque l'angle d'inclinaison ($\alpha$) du volant a atteint un maximum puis a décru d'un angle supérieur à un seuil ($S_{a2}$).

8. Procédé de pilotage selon l'une des revendications précédentes, dans lequel il est mis fin au procédé lorsqu'est détecté un évènement en aval de ladite courbe (21 ; 22) qui requiert un freinage du véhicule automobile (10).

9. Véhicule automobile (10) comportant un groupe motopropulseur, des moyens de freinage et un calculateur (11), **caractérisé en ce que** le calculateur (11) est programmé pour mettre en œuvre un procédé de pilotage conforme à l'une des revendications précédentes.

**Patentansprüche**

1. Verfahren zum Steuern eines Kraftfahrzeugs (10), umfassend:

- einen Schritt des Überprüfens, im Zuge dessen ein in das Kraftfahrzeug (10) integrierter Rechner (11) überprüft, ob sich das Kraftfahrzeug (10) am Eingang einer Kurve (21; 22) oder in einer Kurve (21; 22) befindet, dann, wenn dies der Fall ist,
- einen Schritt des Erfassens einer Seitenbeschleunigung ($d^2y_{est}/dt^2$), der das Kraftfahrzeug (10) ausgesetzt ist,
- einen Schritt des Bestimmens, im Zuge dessen der Rechner (11) einen Längsgeschwindigkeitssollwert (dx*/dt) in Abhängigkeit von der erfassten Seitenbeschleunigung ($d^2y_{est}/dt^2$) bestimmt, und
- einen Schritt des Steuerns, im Zuge dessen das Fahrzeug entsprechend dem Längsgeschwindigkeitssollwert (dx*/dt) gesteuert wird,

und bei dem die Ableitung des Längsgeschwindigkeitssollwerts (dx*/dt) einen Wert aufweist, der von einem Neigungswinkel ($\alpha$) des Lenkrads des Kraftfahrzeugs (10) abhängt und so bestimmt wird, dass sie aufweist:

- einen Wert von null, wenn der Neigungswinkel ($\alpha$) null ist,
- einen maximalen Wert, wenn der Neigungswinkel ($\alpha$) gleich einem Maximum ist, das in Abhängigkeit von dem Krümmungsradius der Kurve (21; 22) bestimmt wird, und ansonsten
- einen Wert, der von dem Neigungswinkel ($\alpha$) abhängig ist und der zwischen null und dem maximalen Wert liegt.

2. Verfahren zum Steuern nach dem vorhergehenden Anspruch, bei dem der Längsgeschwindigkeitssollwert (dx*/dt) so bestimmt wird, dass die Seitenbeschleunigung ($d2y_{est}/dt^2$), der das Kraftfahrzeug (10) ausgesetzt ist, kleiner oder gleich einem Seitenbeschleunigungssollwert ($d^2y*/dt^2$) ist und bevorzugt gleich dem Seitenbeschleunigungssollwert ($d^2y*/dt^2$) ist.

**3.** Verfahren zum Steuern nach einem der vorhergehenden Ansprüche, bei dem der Längsgeschwindigkeitssollwert (dx*/dt) so bestimmt wird, dass die Ableitung der Längsbeschleunigung ($d^3x_{est}/dt^3$), der das Kraftfahrzeug (10) ausgesetzt ist, möglichst nahe bei null liegt.

**4.** Verfahren zum Steuern nach einem der vorhergehenden Ansprüche, bei dem die Ableitung des Längsgeschwindigkeitssollwerts (dx*/dt) einen gesättigten Wert zwischen zwei Grenzwerten aufweist.

**5.** Verfahren zum Steuern nach einem der vorhergehenden Ansprüche, bei dem die Schritte des Überprüfens, des Bestimmens und des Steuerns mit einer Frequenz von mehr als einem Hertz in einer Schleife wiederholt werden.

**6.** Verfahren zum Steuern nach einem der vorhergehenden Ansprüche, bei dem, im Zuge des Schritts des Überprüfens, der Rechner (11) überprüft, ob der Abstand zwischen Fahrzeug (10) und der Kurve kleiner als ein Abstandsschwellenwert ($S_d$) ist und ob der Neigungswinkel ($\alpha$) des Lenkrads größer als ein Winkelschwellenwert ($S_{a1}$) ist.

**7.** Verfahren zum Steuern nach einem der vorhergehenden Ansprüche, bei dem das Verfahren beendet wird, wenn der Neigungswinkel ($\alpha$) des Lenkrads ein Maximum erreicht hat, dann um einen Winkel, der größer als ein Schwellenwert ($S_{a2}$) ist, abgenommen hat.

**8.** Verfahren zum Steuern nach einem der vorhergehenden Ansprüche, bei dem das Verfahren beendet wird, wenn ein hinter der Kurve (21; 22) gelegenes Ereignis detektiert wird, das ein Abbremsen des Kraftfahrzeugs (10) erfordert.

**9.** Kraftfahrzeug (10), umfassend einen Antriebsstrang, Bremseinrichtungen und einen Rechner (11), **dadurch gekennzeichnet, dass** der Rechner (11) dazu programmiert ist, ein Verfahren zum Steuern nach einem der vorhergehenden Ansprüche umzusetzen.

**Claims**

**1.** Method for controlling a motor vehicle (10), comprising:

- a checking step during which a computer (11) on board the motor vehicle (10) checks whether the motor vehicle (10) is entering a curve (21; 22) or in a curve (21; 22), and then, if such is the case,
- an acquisition step of acquiring a lateral acceleration ($d^2y_{est}/dt^2$) experienced by the motor vehicle (10),
- a determination step during which the computer (11) determines a longitudinal-speed setpoint (dx*/dt) as a function of the lateral acceleration ($d^2y_{est}/dt^2$) acquired, and
- a control step during which the vehicle is controlled according to the longitudinal-speed setpoint (dx*/dt),

and wherein the derivative of the longitudinal-speed setpoint (dx*/dt) has a value that is dependent upon an angle of inclination ($\alpha$) of the steering wheel of the motor vehicle (10) and is determined so as to have:

- a value of zero if the angle of inclination ($\alpha$) is zero,
- a maximum value if the angle of inclination ($\alpha$) is equal to a maximum determined according to the radius of curvature of the curve (21; 22), and otherwise
- a value that is dependent on the angle of inclination ($\alpha$) and that is between zero and said maximum value.

**2.** Control method according to the preceding claim, wherein the longitudinal-speed setpoint (dx*/dt) is determined such that the lateral acceleration ($d^2y_{est}/dt^2$) experienced by the motor vehicle (10) is less than or equal to a lateral-acceleration setpoint ($d^2y^*/dt^2$), and preferably equal to said lateral-acceleration setpoint ($d^2y^*/dt^2$).

**3.** Control method according to one of the preceding claims, wherein the longitudinal-speed setpoint (dx*/dt) is determined such that the derivative of the longitudinal acceleration ($d^3x_{est}/dt^3$) experienced by the motor vehicle (10) is as close as possible to zero.

**4.** Control method according to one of the preceding claims, wherein the derivative of the longitudinal-speed setpoint (dx*/dt) has a saturated value between two limits.

**5.** Control method according to one of the preceding claims, wherein the checking, determination and control steps are iterated loopwise, at a frequency higher than one Hertz.

**6.** Control method according to one of the preceding claims, wherein, during the checking step, the computer (11) checks whether the distance between the vehicle (10) and said curve is less than a distance threshold ($S_d$), and whether the angle of inclination ($\alpha$) of the steering wheel is greater than an angular threshold ($S_{a1}$).

**7.** Control method according to one of the preceding claims, wherein the method is terminated when the angle of inclination ($\alpha$) of the steering wheel has reached a maximum and has then decreased by an angle greater than a threshold ($S_{a2}$).

**8.** Control method according to one of the preceding claims, wherein the method is terminated when an event beyond said curve (21; 22) and requiring braking of the motor vehicle (10) is detected.

**9.** Motor vehicle (10) including a power unit, braking means and a computer (11), **characterized in that** the computer (11) is programmed to implement a control method according to one of the preceding claims.

# Fig.1

# Fig.2

# Fig.3

**Fig.4**

**Fig.5**

**Fig.6**

**Fig.7**

**Fig.8**

**Fig.9**

**Fig.10**

**Fig.11**

**Fig.12**

**Fig.13**

**Fig.14**

**Fig.15**

**Fig.16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007070160 A
- DE 102013210916 A1

- US 20120209489 A1